# EUROPÄISCHE PATENTSCHRIFT

(11) **EP 2 307 475 B1**
(45) Veröffentlichungstag und Bekanntmachung des Hinweises auf die Patenterteilung: **20.03.2019**
(21) Anmeldenummer: 09780528.7
(22) Anmeldetag: 14.07.2009
(51) Int. Cl.: C08G 18/12, C08G 18/48, C08G 18/76

(54) **ZELLIGES ELASTOMER MIT GERINGER KRIECHNEIGUNG BEI HOHEN TEMPERATUREN**
CELLULAR ELASTOMER HAVING LOW TENDENCY TO CREEP AT HIGH TEMPERATURES
ÉLASTOMÈRE CELLULAIRE AVEC UNE FAIBLE TENDANCE AU FLUAGE AUX TEMPÉRATURES ÉLEVÉES

(30) Priorität: 25.07.2008 EP 08161203
(43) Veröffentlichungstag der Anmeldung: 13.04.2011
(73) Patentinhaber: Prissok, Frank, 49448 Lemförde (DE)
(72) Erfinder: PRISSOK, Frank, 49448 Lemförde (DE); DUWENHORST, Jörn, 49448 Lemförde (DE); HARMS, Michael, 49356 Diepholz (DE); LASAI, Sven, 49448 Stemshorn (DE)
(86) Internationale Anmeldenummer: PCT/EP2009/058941
(87) Internationale Veröffentlichungsnummer: WO 2010/010002

(56) Entgegenhaltungen:
- EP-A- 1 873 178
- WO-A-2006/094998
- WO-A-2007/068628
- DE-A1- 3 805 106
- US-A1- 2005 272 828

## Beschreibung

Die vorliegende Erfindung betrifft ein zelliges Polyisocyanat-Polyadditionsprodukt mit einer Dichte nach DIN EN ISO 845 zwischen 200 und 800 kg/m³. Des Weiteren bezieht sich die Erfindung auf Prepolymer basierend auf der Umsetzung von wenigstens einem Diisocyanat (a) und wenigstens einem Polyetheralkohol (b), wobei der Polyetheralkohol (b) die folgenden Komponenten enthält:
(b1) aliphatische Polyetheralkohole mit einem zahlenmittleren Molekulargewicht von 300 bis 1000 g/mol,
(b2) aliphatische Polyetheralkohole mit einem zahlenmittleren Molekulargewicht von 2000 bis 10000 g/mol und
(b3) Polytetrahydrofuran mit einem zahlenmittleren Molekulargewicht von 10000 bis 100000 g/mol.

Außerdem betrifft die vorliegende Erfindung Verfahren zur Herstellung eines zelligen Polyisocyanat-Polyadditionsproduktes aus diesem Prepolymer, sowie dieses zellige Polyisocyanat-Polyadditionsprodukt und dessen Verwendung im Automobilsektor.

Zellige, beispielsweise mikrozellige, Polyisocyanat-Polyadditionsprodukte, üblicherweise Polyurethane und/oder Polyisocyanurate, die gegebenenfalls Harnstoffstrukturen enthalten können und erhältlich sind durch Umsetzung von Isocyanaten mit gegenüber Isocyanaten reaktiven Verbindungen sowie Verfahren zu ihrer Herstellung sind allgemein bekannt. Eine besondere Ausgestaltung dieser Produkte sind zellige, insbesondere mikrozellige, Polyurethanelastomere, die sich von üblichen Polyurethanschaumstoffen durch ihre wesentlich höhere Dichte von üblicherweise 200 bis 800 kg/m³, ihre besonderen physikalischen Eigenschaften und die dadurch bedingten Anwendungsmöglichkeiten unterscheiden. Derartige Polyurethanelastomere finden beispielsweise Anwendung als schwingungs- und stoßdämpfende Elemente, insbesondere im Automobilbau. Die aus Polyurethanelastomeren hergestellten Federungselemente werden in Automobilen beispielsweise innerhalb der Gesamtfederbeinkonstruktion, bestehend aus Stoßdämpfer, Spiralfeder und der Elastomerfeder, auf die Kolbenstange des Stoßdämpfers geschoben.

Produkte, zu deren Herstellung ein Prepolymer mit einem geringen NCO-Gehalt ("full prepolymer") eingesetzt wird, zeichnen sich durch relativ temperaturstabile Harnstoffhartphasen aus. Insbesondere bei hoher dynamischer Belastung, d.h. hohe Kraft und/oder hohe Frequenz, entstehen in den Federn erhöhte Temperaturen von mehr als 80 °C. Dabei zeigen Federn mit Harnstoffhartphase im Vergleich zu Produkten mit Urethanhartphase basierend auf Prepolymeren mit hohem NCO-Gehalt, beispielsweise 14 bis 20 % ("semi-prepolymer"), eine höhere dynamische Performance. Der Aufbau der Harnstoffhartphasen erfolgt bei den zelligen Elastomeren üblicherweise durch die Reaktion von Wasser mit Isocyanat. Die gebildete Carbaminsäure zerfällt in Kohlendioxid und Amin, welches unter Harnstoffbildung mit Isocyanat reagiert.

Polyesterol-haltige Weichphasen führen in den zelligen PUR-Elastomeren mit Harnstoffhartphase zu dem höchsten dynamischen Eigenschaftsniveau. Derartige Produkte sind allgemein bekannt.

WO 2001018086 A1 beschreibt den Einsatz von Polyester-polyetherol, erhältlich durch Polykondensation von Polyoxytetramethylenglykol mit einem mittleren Molekulargewicht von 220 bis 270 g/mol und Adipinsäure, zur Herstellung von zelligen Polyurethan-Elastomeren mit guten dynamischen Eigenschaften und hoher Kälteflexibilität. Aufgrund der Esterbindungen ist der resultierende Schaum jedoch hydrolyseempfindlich.

DE-A 3613964 beschreibt die Herstellung von Produkten auf der Basis von reinen Polyester- bzw. Polyester-polyetherol-Weichphasen. Die im Vergleichsbeispiel in DE-A 3613964 aufgeführten Prüfkörper auf Basis von Polytetrahydrofuran (M=2000 g/mol) als Weichphase wiesen nur eine vergleichsweise geringe Biegebeständigkeit auf.

Nachteilig an den bekannten Polyurethan-Elastomeren des Standes der Technik ist, dass diese bei Temperaturen oberhalb 120 °C nur begrenzt eingesetzt werden können. Wenn neben der erhöhten Temperatur das Polyurethan-Elastomer zusätzlich in Kontakt mit Feuchtigkeit ist und/oder ein hoher Druck auf das Elastomer einwirkt, bleiben diese zelligen Polyurethan-Elastomere nicht in der gewünschten Form.

Aufgabe der vorliegenden Erfindung ist es, zellige Polyisocyanat-Polyadditionsprodukte, bevorzugt zellige Polyurethanelastomere, bereitzustellen, die auch bei hohen Temperaturen, bevorzugt auch in Gegenwart von Feuchtigkeit und/oder bei hohen Drücken formstabil sind, so dass sie in direkter Nähe von Motor, Getriebe oder Abgasführung verwendet werden können. Des Weiteren sollen die Polyisocyanat-Polyadditionsprodukte gleichzeitig wenigstens die gleichen vorteilhaften Eigenschaften bezüglich langanhaltender Elastizität, Abriebfestigkeit, Zugfestigkeit, Weiterreißfestigkeit und Druckverformungsresten wie die Elastomere des Standes der Technik aufweisen. Die Polyisocyanat-Polyadditionsprodukte sollen kostengünstig sein und eine sehr gute Mikrobenbeständigkeit sowie Hydrolysestabilität aufweisen. Weiterhin sollten die zelligen Polyisocyanat-Polyadditionsprodukte eine geringe Wasseraufnahme aufweisen und kälteflexibel sein. Aufgabe ist es weiterhin, ein Prepolymer bereitzustellen, aus dem die gewünschten Polyisocyanat-Polyadditionsprodukte herstellbar sind.

Diese Aufgaben werden erfindungsgemäß gelöst durch zelliges Polyisocyanat-Polyadditionsprodukte, bevorzugt Dämpfungselemente, besondere bevorzugt Motorlager, Getriebelager und/oder Auspufflager, insbesondere Motor- und Getriebelager, mit einer Dichte nach DIN EN ISO 845 zwischen 200 und 800 kg/m³, wobei das zellige Polyisocyanat-Polyadditionsprodukt das Umsetzungsprodukt von (a) Isocyanat mit (b) Polyetheralkohol, Polytetrahydrofuran mit einem zahlenmittleren Molekulargewicht von 10000 bis 100000 g/mol enthält. Dabei ist bevorzugt, dass das Polytetrahydrofuran mit einem zahlenmittleren Molekulargewicht von 10000 bis 100000 g/mol in einem Gewichtsanteil von mindestens 4 Gew.-%, bezogen auf das Gesamtgewicht des zelligen Polyisocyanat-Polyadditionsprodukt, in dem zelligen Polyisocyanat-Polyadditionsprodukt vorliegt, wobei sich dieses Gewicht des Polyetheralkohols auf das Gewicht des zur Herstellung des zelligen Polyisocyanat-Polyadditionsproduktes eingesetzten Polyetheralkohols bezieht.

Besonders bevorzugt sind zellige Poyisocyanat-Polyadditionsprodukte, die das Umsetzungsprodukt von (a) Isocyanat mit
(b1) bevorzugt aliphatische Polyetheralkohole mit einem zahlenmittleren Molekulargewicht von 300 bis 1000 g/mol,
(b2) bevorzugt aliphatische Polyetheralkohole mit einem zahlenmittleren Molekulargewicht von 2000 bis 10000 g/mol und
(b3) bevorzugt Polytetrahydrofuran mit einem zahlenmittleren Molekulargewicht von 10000 bis 100000 g/mol
enthalten.

Das erfindungsgemäße zellige Elastomer zeichnet sich dadurch aus, dass es durch den hochmokularen Polyether, bevorzugt durch den Polyetheralkohol (b), der sich durch eine spezifische, und vor allem breite Molekulargewichtsverteilung auszeichnet, eine geringe Kriechneigung bei hohen Temperaturen von bis zu 150 °C, eine verbesserte Tieftemperaturflexibilität, eine hervorragende Hydrolysebeständigkeit und gute mechanische und dynamische Eigenschaften aufweist.

Bevorzugt ist, dass der (b) Polyetheralkohol mit einem zahlenmittleren Molekulargewicht von 10000 bis 100000 g/mol Polytetrahydrofuran ist.

Besonders bevorzugt sind der aliphatische Polyetheralkohol (b1), (b2) und/oder (b3) Polytetrahydrofuran.

Bevorzugt ist das Isocyanat (a) ausgewählt aus der Gruppe bestehend aus 2,2'-Diphenylmethandiisocyanat, 4,4'-Diphenylmethandiisocyanat (MDI), 1,5-Naphthylendiisocyanat (NDI), Tolidindiisocyanat (TODI) und Mischungen davon.

Die erfindungsgemäßen zelligen Polyisocyanat-Polyadditionsprodukte, bevorzugt die zelligen Polyurethane, weisen bevorzugt eine Glastemperatur kleiner -50 °C, eine Zugfestigkeit nach DIN EN ISO 1798 von > 2 N/mm, bevorzugt > 4 N/mm², eine Bruchdehnung nach DIN EN ISO 1798 von ≥ 200 %, bevorzugt ≥ 230% und eine Weiterreißfestigkeit nach DIN ISO 34-1 B(b) von ≥ 6 N/mm, bevorzugt ≥ 10 N/mm und besonders bevorzugt einen Druckverformungsrest (bei 80 °C) in Anlehnung an DIN 53572 von kleiner 25 % auf.

Das erfindungsgemäße zellige Polyisocyanat-Polyadditionsprodukt zeigt bevorzugt bei 24 h Lagerung bei 150 °C und einer Prüflast von 2 kg/cm² ein Kriechen von weniger als 10 %, besonders bevorzugt weniger als 7 %, ganz besonders bevorzugt weniger als 5 %.

Besonders bevorzugt beträgt die Wasseraufnahme der zelligen Polyisocyanat-Polyadditionsprodukte, bevorzugt der zelligen Polyurethane, kleiner 50 Gew.-%, bevorzugt kleiner 30 Gew.-%, besonders bevorzugt kleiner 20 Gew.-% bezogen auf das Gewicht des Polyisocyanat-Polyadditionsproduktes, bevorzugt des Polyurethans.

Gegenstand der vorliegenden Erfindung ist ferner ein Prepolymer aufgebaut mit wenigstens einem Diisocyanat (a) und wenigstens einem Polyetheralkohol (b), wobei der wenigstens eine Polyetheralkohol (b) die folgenden Komponenten enthält:
(b1) aliphatische Polyetheralkohole mit einem zahlenmittleren Molekulargewicht von 300 bis 1000 g/mol,
(b2) aliphatische Polyetheralkohole mit einem zahlenmittleren Molekulargewicht von 2000 bis 10000 g/mol und
(b3) Polytetrahydrofuran mit einem zahlenmittleren Molekulargewicht von 10000 bis 100000 g/mol.

Das erfindungsgemäße Prepolymer zeichnet sich dadurch aus, dass es wenigstens einen Polyetheralkohol (b) enthält, der sich durch eine spezifische, und vor allem breite Molekulargewichtsverteilung auszeichnet. Durch den erfindungsgemäßen Einsatz der speziellen Polyetheralkohole (b) gelingt es, Prepolymere zu erhalten, aus denen Polyurethan-Elastomere herstellbar sind, die nur eine geringe Kriechneigung bei hohen Temperaturen von bis zu 150 °C, eine verbesserte Tieftemperaturflexibilität und gute mechanische und dynamische Eigenschaften aufweisen. Vor allem bei Verwendung von 1,5-Naphthylendiisocyanat (NDI) als Diisocyanat (a) können Prepolymere und daraus Polyurethan-Elastomere erhalten werden, die im Vergleich zu anderen zelligen und kompakten Polyurethan-Elastomeren nur eine geringe Kriechneigung bei hohen Temperaturen, eine verbesserte Tieftemperaturflexibilität und gute mechanische und dynamische Eigenschaften, sowie eine hervorragende Hydrolysebeständigkeit, aufweisen.

Das erfindungsgemäße Prepolymer ist aufgebaut aus wenigstens einem Diisocyanat (a) und wenigstens einem Polyetheralkohol (b).

Im Allgemeinen können als Diisocyanat (a) alle dem Fachmann bekannten und für den Einsatz in Polyurethan-Elastomeren geeigneten Diisocyanate verwendet werden. In einer bevorzugten Ausführungsform der vorliegenden Erfindung ist das wenigstens eine Diisocyanat (a) ein aromatisches Diisocyanat, besonders bevorzugt ist das Diisocyanat (a) ausgewählt ist aus der Gruppe bestehend aus 2,2'-Diphenylmethandiisocyanat, 4,4'-Diphenylmethandiisocyanat (MDI), 1,5-Naphthylendiisocyanat (NDI), Tolidindiisocyanat (TODI) und Mischungen davon, besonders bevorzugt 1,5-Naphthylendiisocyanat (NDI), Tolidindiisocyanat (TODI) und Mischungen davon, ganz besonders bevorzugt 1,5-Naphthylendiisocyanat (NDI). Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, so genannten Isocyanat-Prepolymeren, eingesetzt werden.

Die erfindungsgemäß eingesetzten Diisocyanate können nach dem Fachmann bekannten Verfahren hergestellt werden bzw. sind, zumindest teilweise, kommerziell erhältlich.

Das erfindungsgemäße Prepolymer ist neben dem wenigstens einen Diisocyanat (a) aufgebaut aus wenigstens einem Polyetheralkohol (b), welcher die folgenden Komponenten enthält:
(b1) aliphatische Polyetheralkohole mit einem zahlenmittleren Molekulargewicht von 300 bis 1000 g/mol,
(b2) aliphatische Polyetheralkohole mit einem zahlenmittleren Molekulargewicht von 2000 bis 10000 g/mol und
(b3) Polytetrahydrofuran mit einem zahlenmittleren Molekulargewicht von 10000 bis 100000 g/mol.

In einer bevorzugten Ausführungsform enthält das erfindungsgemäße Prepolymer wenigstens 12 Gew.-%, besonders bevorzugt wenigstens 12,5 Gew.-%, ganz besonders bevorzugt 12,5 bis 25 Gew.-% Komponente (b1), wenigstens 35 Gew.-%, besonders bevorzugt wenigstens 35,5 Gew.-%, ganz besonders bevorzugt 35,5 bis 55 Gew.-% Komponente (b2) und wenigstens 4 Gew.-%, besonders bevorzugt 5 bis 8 Gew.-% Komponente (b3), wobei die Gewichtsangaben jeweils bezogen sind auf das Gesamtgewicht der Polyetheralkohole, bevorzugt der Komponente (b). Des Weiteren kann das erfindungsgemäße Polyetheralkohol-Gemisch entsprechende polymere Verbindung mit zahlenmittlerem Molekulargewicht von 1000 bis 2000 g/mol enthalten, bevorzugt in einer Menge von 15 bis 35 Gew.-%. Die einzelnen genannten Molekulargewichtsfraktionen ergänzen sich bevorzugt zu 100 Gew.-%, d. h. in einer bevorzugten Ausführungsform liegen neben Polyetheralkoholen mit verschiedenen zahlenmittleren Molekulargewichten keine weiteren Verbindungen in Komponente (b) vor.

Der erfindungsgemäß eingesetzte Polyetheralkohol (b) weist die oben genannte sehr spezifische Verteilung verschiedener zahlenmittlerer Molekulargewichte auf, insbesondere ist diese Verteilung sehr breit, d. h. es liegen neben Polyetheralkoholen mit niedrigem zahlenmittleren Molekulargewicht auch Polyetheralkohole mit sehr hohen zahlenmittleren Molekulargewichten vor. Überraschenderweise führt diese breite Molekulargewichtsverteilung zu den erfindungsgemäßen Vorteilen der Prepolymere. Beispielsweise tritt durch die breite Molekulargewichtsverteilung des Polyetheralkohols in dem aus dem Prepolymer hergestellten Polyisocyanat-Polyadditionsprodukt keine störende Weichphasenkristallisation oberhalb von -40 °C auf, welche für Polyetheralkohole mit solch hohen Molekulargewichten ansonsten typisch ist.

Das zahlenmittlere Molekulargewicht der erfindungsgemäß eingesetzten Polyetheralkohole kann nach dem Fachmann bekannten Verfahren bestimmt werden, beispielsweise durch Gel-Permeations-Chromatographie (GPC). Bei diesem Verfahren erfolgt eine Auftrennung eines Gemisches von Polyetheralkoholen mit verschiedenen Molekulargewichten aufgrund ihrer unterschiedlichen Verweilzeiten an einer stationären Phase. Durch Feststellen der Verweilzeiten der einzelnen Fraktionen und anschließenden Vergleich dieser Werte mit Werten, die für einen bekannten Standard ermittelt worden sind, können die zahlenmittleren Molekulargewichte bestimmt werden.

Als Polyetheralkohole (b) können Verbindungen eingesetzt werden, die aus den üblichen und allgemein bekannten Struktureinheiten aufgebaut sind, beispielsweise Polyetheralkohole auf der Basis von Ethylenoxid und/oder Propylenoxid hergestellt durch Alkoxylierung üblicher Startsubstanzen. Die Funktionalität der Polyetheralkohole (b) kann zwischen 1,7 und 2,3 betragen, bevorzugt beträgt die mittlere Funktionalität der Mischung der Polyetheralkohole zwischen 1,8 und 2,2, besonders bevorzugt zwischen 1,9 und 2,1.

In einer bevorzugten Ausführungsform ist der aliphatische Polyetheralkohol (b1), (b2) und/oder (b3) Polytetrahydrofuran (PTHF). Polytetrahydrofurane sind Polyole, die beispielsweise durch kationische Polymerisation aus Tetrahydrofuran hergestellt werden. Verfahren zur Herstellung von Polytetrahydrofuranen sind dem Fachmann bekannt. Entsprechende Polytetrahydrofurane sind teilweise auch kommerziell erhältlich.

Das erfindungsgemäße Prepolymer kann besonders bevorzugt Allophanatgruppen enthalten. Diese Allophanate können bei der Prepolymerherstellung durch Reaktionstemperaturen oberhalb 100 °C, bevorzugt 120 bis 150 °C aufgebaut werden. Die Prepolymerherstellung kann somit bevorzugt derart erfolgen, dass zu dem auf 140 °C erhitzten vorgelegten Polyetheralkoholen (b) NDI-Schuppen gegeben werden.

Besonders bevorzugt ist das erfindungsgemäße Prepolymer aufgebaut aus einem Diisocyanat (a) ausgewählt aus der Gruppe bestehend aus 1,5-Naphthylendiisocyanat (NDI), Tolidindiisocyanat (TODI) und Mischungen davon, insbesondere 1,5-Naphthylendiisocyanat (NDI) und Polytetrahydrofuran als Polyetheralkohol (b), wobei das Polytetrahydrofuran die folgenden Komponenten enthält:
(b1) wenigstens 12 Gew.-% Polytetrahydrofuran mit einem zahlenmittleren Molekulargewicht von 300 bis 1000 g/mol,
(b2) wenigstens 35 Gew.-% Polytetrahydrofuran mit einem zahlenmittleren Molekulargewicht von 2000 bis 10000 g/mol und
(b3) wenigstens 4 Gew.-% Polytetrahydrofuran mit einem zahlenmittleren Molekulargewicht von 10000 bis 100000 g/mol,
wobei Polytetrahydrofurane mit einem zahlenmittleren Molekulargewicht von 1000 bis 2000 g/mol vorliegen können, und sich die Mengen aller vorhandenen Polytetrahydrofurane zu 100 Gew.-% addieren.

Das erfindungsgemäße Prepolymer weist bevorzugt einen geringen NCO-Gehalt auf. In einer besonders bevorzugten Ausführungsform weist das erfindungsgemäße Prepolymer einen NCO-Gehalt von höchstens 10%, besonders bevorzugt 2 bis 8%, ganz besonders bevorzugt 4 bis 7%, auf. Verfahren zur Bestimmung des NCO-Gehaltes des Prepolymeren sind dem Fachmann bekannt, beispielsweise nasschemische Verfahren. Dabei wird das Prepolymer in einem geeigneten Lösungsmittel gelöst und mit überschüssigem Amin versetzt. Das Amin, welches nicht mit dem Isocyanat reagiert hat, wird anschließend mit HCI rücktitriert. Aus der Differenz der eingesetzten und der rücktitrierten Stoffmengen an Amin wird die Stoffmenge Isocyanat berechnet.

Das erfindungsgemäße Prepolymer weist im Allgemeinen eine Viskosität von 1000 bis 5000 mPas bei 80 °C, bevorzugt 2000 bis 4000 mPas bei 80 °C, jeweils abhängig vom NCO-Gehalt des Prepolymer, auf. Die angegebene Viskosität wird bevorzugt mit einem Rotationsviskosimeter bestimmt.

Verfahren zur Herstellung des erfindungsgemäßen Prepolymeren sind dem Fachmann bekannt und beispielsweise in EP 0 850 260 und EP 0 854 889 beschrieben. Aus dem erfindungsgemäßen Prepolymeren lassen sich Polyisocyanat-Polyadditionsprodukte, insbesondere Polyurethane, mit den oben genannten vorteilhaften Eigenschaften herstellen.

Daher betrifft die vorliegende Erfindung auch ein Verfahren zur Herstellung eines zelligen Polyisocyanat-Polyadditionsproduktes, bevorzugt eines Polyurethans, umfassend die Schritte:
(A) Umsetzung von wenigstens einem Diisocyanat (a) mit wenigstens einem Polyetheralkohol (b), um ein Prepolymer zu erhalten und
(B) Umsetzung des in Schritt (A) erhaltenen Prepolymers in einer Form mit wenigstens einer Vernetzungskomponente enthaltend Wasser (e), um das zellige Polyisocyanat-Polyadditionsprodukt zu erhalten,
wobei der in Schritt (A) eingesetzte Polyetheralkohol (b) die folgenden Komponenten enthält:
(b1) bevorzugt aliphatische Polyetheralkohole mit einem zahlenmittleren Molekulargewicht von 300 bis 1000 g/mol,
(b2) bevorzugt aliphatische Polyetheralkohole mit einem zahlenmittleren Molekulargewicht von 2000 bis 10000 g/mol und
(b3) bevorzugt Polytetrahydrofuran mit einem zahlenmittleren Molekulargewicht von 10000 bis 100000 g/mol.

Bevorzugt wird das erfindungsgemäße Verfahren durchgeführt, indem man in einem zweistufigen Verfahren in Schritt (A) durch Umsetzung von (a) mit (b) ein Isocyanatgruppen aufweisendes Prepolymer herstellt und dieses Prepolymer in Schritt (B) in einer Form mit einer Vernetzerkomponente enthaltend sulfatierte Fettsäureester (d) und Wasser (e) umsetzt, wobei Polysiloxane (c) und gegebenenfalls Katalysatoren (f), Treibmittel (g) und/oder Zusatzstoffe (h) in dem Prepolymer und/oder der Vernetzerkomponente enthalten sein können. Die Vernetzerkomponente kann dabei als (h) Carbodiimid enthalten.

Die Vernetzerkomponente enthält somit bevorzugt zusätzlich zu dem Wasser (e) noch sulfatierte Fettsäureester (d), bevorzugt zwischen 0,005 bis 1 Gew.-% sulfatierte Fettsäureester, bezogen auf das Gewicht der zelligen Polyisocyanat-Polyadditionsprodukte, bevorzugt der zelligen Polyurethane, sowie Katalysatoren (f) sowie gegebenenfalls Polysiloxane (c), Treibmittel (g) und/oder Hilfsstoffe (h). Die Mengenangaben in Bezug auf die Fettsäureester beziehen sich dabei auf das Gewicht der sulfatierten Fettsäureester ohne Wasser.

Als Katalysatoren können dabei in der Vernetzerkomponente bevorzugt Zinn-Verbindungen enthalten sein, besonders bevorzugt Zinn(IV)-Verbindungen, besonders bevorzugt Di-n-octylzinn-(IV)-bis-(2-ethylhexylthioglycolat) und/oder n-Octylzinn-(IV)-tris-(2-ethylhexylthioglycolat). Dadurch konnte die erforderliche Aushärtezeit deutlich reduziert werden. Ein vergleichbarer Effekt konnte durch eine bloße Erhöhung der Menge an aminischem Katalysator nicht erzielt werden. Besonders bevorzugt enthält die Vernetzerkomponente zusätzlich zu den Zinn-Verbindungen aminische Katalysatoren, insbesondere tertiäre Amine, besonders bevorzugt Bis-(dimethylaminoethyl)ether, 1,4-Diazabicyclo-[2,2,2]-octan, N,N,N',N",N"-Pentamethyldiethylendiamin, N-Methylimidazol, N-Propylimidazol und/oder N-(2-dimethyaminoethyl)-N'-piperazin.

Als Polysiloxane können allgemein bekannte Verbindungen eingesetzt werden, beispielsweise Polymethylsiloxane, Polydimethylsiloxane und/oder Polyoxyalkylen-Silikon-Copolymere. Beispielsweise kommen Verbindungen der folgenden allgemeinen Strukturformel in Betracht:

XYZSi-O-[SiXY-O-]ₙ-SiXYZ

mit
X: -CH₃, -CH₂CH₃, -[CH₂CH₂-CO-O]ₘ-H;
Y: -CH₃, -CH₂CH₃, -[CH₂CH₂-CO-O]ₘ-H;
Z: -OH, -R-OH, -R-SH, -R-NH-R, -[CH₂CH₂-CO-O]ₘ-H;
n: 1 bis 100;
m: 1 bis 100;
R: Alkyl, -O-Alkyl, -S-Alkyl, -NH-Alkyl mit 1 bis 20 Kohlenstoffatomen im Alkylrest.

Bevorzugt weisen die Polysiloxane eine Viskosität bei 25 °C von 20 bis 2000 mPas auf.

Als sulfatierte Fettsäureester können allgemein bekannte sulfatierte Festsäureester, die auch kommerziell erhältlich sind, eingesetzt werden. Bevorzugt wird als sulfatierter Fettsäureester sulfatiertes Rizinusöl eingesetzt.

Die Menge an sulfatierten Fettsäureestern geht bevorzugt nicht über den bevorzugten Bereichen hinaus, da insbesondere eine deutlich verbesserte, d. h. geringere Wasseraufnahme der Formkörper mit einer größeren Menge dieses Emulgators nicht erreicht wird. Sollten aufgrund des Einsatzes weiterer Verbindungen in der Vernetzerkomponente, die nachfolgend beschrieben wird, beispielsweise Hydrolyseschutzmittel, z. B. Carbodiimide, für eine ausreichende Homogenisierung dieser Vernetzerkomponente weitere Mengen an Emulgatoren erforderlich sein, so können über die erfindungsgemäße Menge an sulfatierten Fettsäureestern hinaus oder als vollständiger Ersatz der sulfatierten Fettsäureester beispielsweise weitere allgemein bekannte Emulgatoren eingesetzt werden, z. B. Polyglykolester von Fettsäuren, Alkoxylate von Fettsäuren, bevorzugt Polyethylenglykolester, Polypropylenglykolester, Polyethylenpolypropylenglykolester, Ethoxylate und/oder Propoxylate der Linolsäure, Linolensäure, Ölsäure, Arachidonsäure, besonders bevorzugt Ölsäureethoxylate.

Die sulfatierten Fettsäureester können bevorzugt als wässrige Lösungen, beispielsweise als 50 gew.-%ige wässrige Lösungen eingesetzt werden.

Bevorzugt wird die Herstellung der erfindungsgemäßen zelligen Polyisocyanat-Polyadditionsprodukte in einer Form bei einer Oberflächentemperatur der Forminnenwand von 60 bis 90 °C durchgeführt. Unter dem Begriff "Oberflächentemperatur der Forminnenwand" ist dabei die Temperatur zu verstehen, die die Oberfläche der Innenwand der Form, d. h. die Oberfläche der Form, die üblicherweise mit dem Reaktionssystem bei der Herstellung der Formteile in Kontakt steht, bei der Herstellung der Formteile wenigstens kurzzeitig, bevorzugt mindestens 10 min, aufweist.

Die vorliegende Erfindung betrifft auch die Verwendung der erfindungsgemäßen zelligen Polyisocyanat-Polyadditionsprodukte, beispielsweise als Formkörper, als Dämpfungselemente im Fahrzeugbau, beispielsweise im Automobilbau, z.B. als Zusatzfedern, Anschlagpuffer, Querlenkerlager, Hinterachsfahrschemellager, Stabilisator-Lager, Längsstreben-Lager, Federbein-Stützlager, Stoßdämpferlager, Lager für Dreieckslenker, bevorzugt in der Nähe von heißen Vorrichtungen eines Automobils oder Zweirades, beispielsweise in der Nähe des Auspuffs, des Motors, des Getriebes, und/oder als auf der Felge befindliches Notrad, das beispielsweise bei einem Reifenschaden bewirkt, dass das Fahrzeug auf dem zelligen Polyisocyanat-Polyadditionsprodukt fährt und steuerbar bleibt. Bevorzugt ist die Verwendung der erfindungsgemäßen zelligen Polyisocyanat-Polyadditionsprodukte als Dämpfungs- und Lagerelemente für erhöhte Einsatztemperaturen im Automobilbau, besonders bevorzugt ist die Verwendung als Motor-, Getriebe- oder Auspuffanlagenlager, insbesondere Motor- und Getriebelager.

Die erfindungsgemäßen Formkörper, d.h. die zelligen Polyisocyanat-Polyadditionsprodukte, bevorzugt die mikrozelligen Polyurethanelastomere, weisen demnach nicht nur exzellente mechanische und dynamische Eigenschaften auf, insbesondere die Hydrolysestabilität, die Mikrobenbeständigkeit und die Kälteflexibilität konnten wie gewünscht erfindungsgemäß deutlich verbessert werden. Insbesondere diese Kombination besonders vorteilhafter Eigenschaften ist aus dem Stand der Technik nicht bekannt.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dicht schließendes Formwerkzeug gebracht werden.

Die Menge des in das Formwerkzeug eingebrachten Reaktionsgemisches wird üblicherweise so bemessen, dass die erhaltenen Formkörper die bereits dargestellte Dichte aufweisen. Die erfindungsgemäß erhältlichen zelligen Polyisocyanat-Polyadditionsprodukte weisen bevorzugt eine Dichte nach DIN EN ISO 845 von 200 bis 800 kg/m³, besonders bevorzugt 300 bis 600 kg/m³ auf.

Die Ausgangskomponenten werden üblicherweise mit einer Temperatur von 15 bis 120 °C, vorzugsweise von 20 bis 100 °C, in das Formwerkzeug eingebracht. Die Verdichtungsgrade zur Herstellung der Formkörper liegen zwischen 1,1 und 8, vorzugsweise zwischen 2 und 6.

Die erfindungsgemäßen zelligen Polyisocyanat-Polyadditionsprodukte werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zwei-stufigen Prozess zunächst ein NCO-gruppenhaltiges Prepolymer hergestellt. Dazu werden die Komponenten (b) mit (a) im Überschuss üblicherweise bei Temperaturen von 80 °C bis 160 °C zur Reaktion gebracht. Die Reaktionszeit ist auf das Erreichen des theoretischen NCO-Gehaltes bemessen.

Bevorzugt erfolgt demnach die erfindungsgemäße Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend (d) und (e) umsetzt, wobei (c) und gegebenenfalls (f), (g) und/oder (h) in dem Prepolymer und/oder der Vernetzerkomponente enthalten sind.

Die Komponente (c) kann bei dem zweistufigen Verfahren sowohl dem Prepolymeren vor, während und/oder nach seiner Herstellung und/oder der Vernetzerkomponenten zugegeben werden. Die Hilfs- und/oder Zusatzstoffe (h) können bevorzugt in der Vernetzerkomponente enthalten sein.

Zur Verbesserung der Entformung der erfindungsgemäß hergestellten Formkörper hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Die Entformzeiten betragen in Abhängigkeit von der Größe und Geometrie des Formteils 1 bis zu 60 Minuten.

Nach der Herstellung der Formteile in der Form können die Formteile bevorzugt für eine Dauer von 1 bis 48 Stunden bei Temperaturen von üblicherweise von 70 bis 140 °C getempert werden.

Zu den Ausgangskomponenten enthaltend in dem erfindungsgemäßen Reaktionsgemisch kann folgendes ausgeführt werden:
Erfindungsgemäß bevorzugt wird in dem Verfahren das erfindungsgemäße Prepolymer eingesetzt.

Bezüglich des wenigstens einen Diisocyantes (a) gilt das oben Gesagte.

Als Polyetheralkohole (b) kommen die bereits dargestellten Mischungen mit breiter Molekulargewichtsverteilung zum Einsatz. Diese können gegebenenfalls zusammen mit allgemein bekannten Polyhydroxylverbindungen eingesetzt werden, die nicht unter die erfindungsgemäße Definition der Komponente (b) fallen, beispielsweise Polyesterpolyalkohole und/oder hydroxylgruppenhaltige Polycarbonate, bevorzugt solche mit einer Funktionalität von 2 bis 3 und bevorzugt einem Molekulargewicht von 60 bis 7000, besonders bevorzugt 500 bis 6000, insbesondere 1000 bis 6000. Besonders bevorzugt werden ausschließlich die erfindungsgemäßen Polyetherole als Komponente (b) eingesetzt.

Zusätzlich zu den bereits beschriebenen in dem wenigstens einen Polyetheralkohol (b) vorliegenden Komponenten können des weiteren niedermolekulare Kettenverlängerungsmittel (b4) mit einem Molekulargewicht von kleiner 500, bevorzugt 60 bis 499 eingesetzt werden, die nicht unter die erfindungsgemäße Definition der Komponente (b) fallen, beispielsweise ausgewählt aus der Gruppe der difunktionellen Alkohole, difunktionellen Polyoxyalkylen-polyole. Als (b4) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder difunktionelle Polyoxyalkylen-polyole. Weiterhin können eingesetzt werden alkylsubstituierte aromatisehe Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind. Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, so genanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden. Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Erfindungsgemäß wird die Herstellung der zelligen Polyisocyanat-Polyadditionsprodukte in Gegenwart von Wasser (e) durchgeführt. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (b) und (g) aufgeführt. Per Definition enthalten die Komponenten (b) und (g) somit kein Wasser, das per Definition ausschließlich als (e) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b). Das Wasser kann vollständig oder teilweise in Form der wässrigen Lösungen des sulfatierten Fettsäureesters eingesetzt werden.

Zur Beschleunigung der Reaktion können dem Reaktionsansatz bei der Umsetzung eines Prepolymeren mit einer Vernetzerkomponente allgemein bekannte Katalysatoren (f) zugefügt werden. Die Katalysatoren (f) können einzeln wie auch in Abmischung miteinander zugegeben werden. Die bevorzugten Katalysatoren wurden bereits dargestellt. Diese können ggf. gemeinsam mit anderen allgemein bekannten Katalysatoren eingesetzt werden, z.B. metallorganischen Verbindungen, wie Zinn-(II)-Salze von organischen Carbonsäuren, z. B. Zinn-(II)-dioctoat, Zinn-(II)-dilaurat, Dibutylzinndiacetat und Dibutylzinndilaurat und tertiären Aminen wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-)Butylpiperazin, N,N,N',N",N"-Pentamethyldiethylendiamin oder ähnliche. Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Katalysatoren (f) in Mengen von 0,0001 bis 0,5 Gew.-%, bezogen auf das Prepolymere, zur Anwendung.

Gegebenenfalls können in der Polyurethanherstellung übliche Treibmittel (g) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluordimethyl-iso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im Allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (e) als Treibmittel eingesetzt.

Bei der erfindungsgemäßen Herstellung der Formteile können Hilfs- und Zusatzstoffe (h) eingesetzt werden. Dazu zählen beispielsweise allgemein bekannte oberflächenaktive Substanzen, Hydrolyseschutzmittel, Füllstoffe, Antioxidantien, Zellregler, Flammschutzmittel sowie Farbstoffe. Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise zu den erfindungsgemäßen Emulgatoren zusätzliche Verbindungen mit emulgierender Wirkung, wie die Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure. Des Weiteren kommen Schaumstabilisatoren in Frage, wie z. B. oxethylierte Alkylphenole, oxethylierte Fettalkohole, Paraffinöle, Ricinusöl- bzw. Ricinolsäureester, Türkischrotöl und Erdnußöl und Zellregler, wie Paraffine und Fettalkohole. Die oberflächenaktiven Substanzen werden üblicherweise in Mengen von 0,01 bis 5 Gew.-Teilen, bezogen auf 100 Gew.-Teile der Komponenten (b) angewandt. Per Definition fallen die Verbindungen (c) und (d) nicht unter die Hilfs- und Zusatzstoffe (h).

Die vorliegende Erfindung betrifft auch ein zelliges Polyisocyanat-Polyadditionsprodukt, bevorzugt ein Polyurethan-Elastomer, herstellbar nach dem erfindungsgemäßen Verfahren.

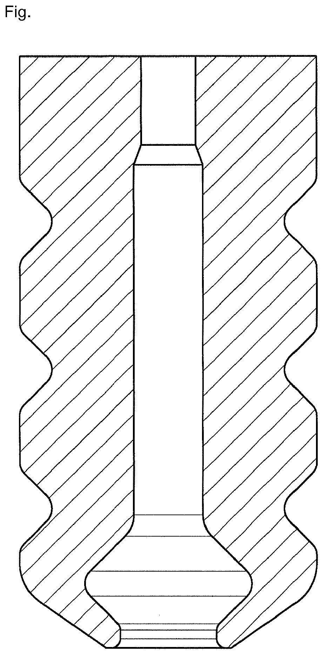

Figur 1 zeigt ein erfindungsgemäßes Formteil, hergestellt aus dem erfindungsgemäßen Polyurethan-Elastomer.

Durch die nachfolgenden Beispiele soll die Erfindung näher erläutert werden.

### Beispiele

Die folgenden Polytetrahydrofuran (PTHF)- Fraktionen wurden eingesetzt:

| | |
|---|---|
| | |
| PTHF aus einem zahlenmittleren Molekulargewichtsbereich von 300 bis 1000 g/mol und einem zahlenmittleren Molekulargewicht von 595 g/mol | PTHF I |
| PTHF aus einem zahlenmittleren Molekulargewichtsbereich von 1000 bis 2000 g/mol und mit einem zahlenmittleren Molekulargewicht von 1430 g/mol | PTHF II |
| PTHF aus einem zahlenmittleren Molekulargewichtsbereich von 2000 bis 10000 g/mol und mit einem zahlenmittleren Molekulargewicht von 3600 g/mol | PTHF III |
| PTHF aus einem zahlenmittleren Molekulargewichtsbereich von 10000 bis 100000 g/mol und mit einem zahlenmittleren Mole-kulargewicht von 14450 g/mol | PTHF IV |

### Herstellung von Bauteilen:

### Beispiel 1 (erfindungsgemäß):

### 1) Herstellung des NCO-gruppenhaltigen Prepolymeren

12,8 Gew.-% eines Polytetrahydrofurans I, 18,9 Gew.-% eines Polytetrahydrofurans II, 37,8 Gew.-% eines Polytetrahydrofurans III, 6 Gew.-% eines Polytetrahydrofurans IV und 2 ppm Zitronensäure wurden in einem Weißblecheimer unter Stickstoffatmosphäre auf 140 °C erwärmt und unter Rühren mit 24,5 Gew.-% Naphthylen-1,5-diisocyanat (NDI) versetzt.

Die Reaktionstemperatur wurde zur vollständigen Umsetzung für mindestens 15 min bei über 140 °C gehalten und anschließend abgekühlt. Es resultierte eine fast farblose Flüssigkeit mit einem NCO-Gehalt von 5,6%.

### 2) Herstellung der Vernetzerkomponente durch Mischen der folgenden Komponenten:

| | |
|---|---|
| 36,02 Gew.-% | 50%-ige wässrige Lösung eines Fettsäuresulfates |
| 19,91 Gew.-% | Rizinolsäurepolyglykolester |
| 4,58 Gew.-% | Emulgatorengemisch auf Fettsäureesterbasis |
| 18,01 Gew.-% | Entmineralisiertes Wasser |
| 20,63 Gew.-% | Carbodiimid |
| 0,79 Gew.-% | Aminkatalysator |

### 3) Herstellung der Formkörper

97,0 Gew.-% des 90 °C warmen Prepolymeren gemäß (1) wurden mit 3,0 Gew.-% der 50 °C warmen Vernetzerkomponente gemäß (2) gemischt. 75 g der Mischung wurden in ein auf 85 °C temperiertes, verschließbares Formwerkzeug mit Federgeometrie gemäß Fig. 1 eingebracht und der Schaum bei 85 °C ausgehärtet. Zusätzlich wurden Blockformen verschäumt. Nach Entformung des mikrozellulären Produktes wurde das Formteil thermisch nachgehärtet.

### Beispiel 2 (erfindungsgemäß):

### 1) Herstellung des NCO-gruppenhaltigen Prepolymeren

12,1 Gew.-% eines Polytetrahydrofurans I, 17,9 Gew.-% eines Polytetrahydrofurans II, 35,7 Gew.-% eines Polytetrahydrofurans III, 5,8 Gew.-% eines Polytetrahydrofurans IV und 2 ppm Zitronensäure wurden in einem Weißblecheimer unter Stickstoffatmosphäre auf 140 °C erwärmt und unter Rühren mit 28,6 Gew.-Teile Naphthylen-1,5-diisocyanat (NDI) versetzt. Die Reaktionstemperatur wurde zur vollständigen Umsetzung für 16 min bei über 130 °C gehalten und anschließend abgekühlt. Es resultierte eine fast farblose Flüssigkeit mit einem NCO-Gehalt von 7,4%.

### 2) Herstellung der Vernetzerkomponente: siehe Beispiel 1

### 3) Herstellung der Formkörper

96,0 Gew.-% des 90 °C warmen Prepolymeren gemäß (1) wurden mit 4,0 Gew.-% der 50 °C warmen Vernetzerkomponente gemäß (2) gemischt. 75 g der Mischung wurden in ein auf 85 °C temperiertes, verschließbares Formwerkzeug mit Federgeometrie gemäß Fig. 1 eingebracht und der Schaum bei 85 °C ausgehärtet. Zusätzlich wurden Blockformen verschäumt. Nach Entformung des mikrozellulären Produktes wurde das Formteil thermisch nachgehärtet.

### Beispiel 3 (erfindungsgemäß):

### 1) Herstellung des NCO-gruppenhaltigen Prepolymeren

12,8 Gew.-% eines Polytetrahydrofurans I, 18,8 Gew.-% eines Polytetrahydrofurans II, 37,6 Gew.-% eines Polytetrahydrofurans III, 6 Gew.-% eines Polytetrahydrofurans IV, und 2 ppm Zitronensäure wurden in einem Weißblecheimer unter Stickstoffatmosphäre auf 140 °C erwärmt und unter Rühren mit 24,8 Gew.-% Naphthylen-1,5-diisocyanat (NDI) versetzt. Die Reaktionstemperatur wurde zur vollständigen Umsetzung für 30 min bei über 140 °C gehalten und anschließend abgekühlt. Es resultierte eine fast farblose Flüssigkeit mit einem NCO-Gehalt von 5,4%.

### 2) Herstellung der Vernetzerkomponente: siehe Beispiel 1

### 3) Herstellung der Formkörper

97,0 Gew.-% des 90 °C warmen Prepolymeren gemäß (1) wurden mit 3,0 Gew.-% der 50 °C warmen Vernetzerkomponente gemäß (2) gemischt. 75 g der Mischung wurden in ein auf 85 °C temperiertes, verschließbares Formwerkzeug mit Federgeometrie gemäß Fig. 1 eingebracht und der Schaum bei 85 °C ausgehärtet. Zusätzlich wurden Blockformen verschäumt. Das Raumgewicht der Formköper wurde im Bereich von 300g/l bis zu 650g/l variiert. Nach Entformung des mikrozellulären Produktes wurde das Formteil thermisch nachgehärtet.

### Beispiel 4 (erfindungsgemäß):

### 1) Herstellung des NCO-gruppenhaltigen Prepolymeren

12,6 Gew.-% eines Polytetrahydrofurans I, 18,5 Gew.-% eines Polytetrahydrofurans II, 37,0 Gew.-% eines Polytetrahydrofurans III, 6 Gew.-% eines Polytetrahydrofurans IV wurden in einem Weißblecheimer unter Stickstoffatmosphäre auf 140 °C erwärmt und unter Rühren mit 1,3 Gew.-% eines trimerisierten Hexamethylendiisocyanates und 24,6 Gew.-% Naphthylen-1,5-diisocyanat versetzt. Die Reaktionstemperatur wurde zur vollständigen Umsetzung für 28 min bei über 140 °C gehalten und anschließend abgekühlt. Es resultierte eine fast farblose Flüssigkeit mit einem NCO-Gehalt von 5,93%.

### 2) Herstellung der Vernetzerkomponente: siehe Beispiel 1

### 3) Herstellung der Formkörper

97,0 Gew.-% des 90 °C warmen Prepolymeren gemäß (1) wurden mit 3,0 Gew.-% der 50 °C warmen Vernetzerkomponente gemäß (2) gemischt. 75 g der Mischung wurden in ein auf 85 °C temperiertes, verschließbares Formwerkzeug mit Federgeometrie gemäß Fig. 1 eingebracht und der Schaum bei 85 °C ausgehärtet. Zusätzlich wurden Blockformen verschäumt. Nach Entformung des mikrozellulären Produktes wurde das Formteil thermisch nachgehärtet.

### Beispiel 5 (erfindungsgemäß):

### 1) Herstellung des NCO-gruppenhaltigen Prepolymeren

13,0 Gew.-% eines Polytetrahydrofurans I, 19,0 Gew.-% eines Polytetrahydrofurans II, 38,2 Gew.-% eines Polytetrahydrofurans III, 6,1 Gew.-% eines Polytetrahydrofurans IV und 2 ppm Zitronensäure wurden in einem Weißblecheimer unter Stickstoffatmosphäre auf 140 °C erwärmt und unter Rühren mit 23,7 Gew.-% Naphthylen-1,5-diisocyanat (NDI) versetzt. Die Reaktionstemperatur wurde zur vollständigen Umsetzung für 10 min bei über 140 °C gehalten und anschließend abgekühlt. Es resultierte eine fast farblose Flüssigkeit mit einem NCO-Gehalt von 5,46%.

### 2) Herstellung der Vernetzerkomponente: siehe Beispiel 1

### 3) Herstellung der Formkörper

97,0 Gew.-% des 90 °C warmen Prepolymeren gemäß (1) wurden mit 3,0 Gew.-% der 50 °C warmen Vernetzerkomponente gemäß (2) gemischt. 75 g der Mischung wurden in ein auf 85 °C temperiertes, verschließbares Formwerkzeug mit Federgeometrie gemäß Fig. 1 eingebracht und der Schaum bei 85 °C ausgehärtet. Zusätzlich wurden Blockformen verschäumt. Nach Entformung des mikrozellulären Produktes wurde das Formteil thermisch nachgehärtet.

### Beispiel 6 (erfindungsgemäß):

### 1) Herstellung des NCO-gruppenhaltigen Prepolymeren

12,0 Gew.-% eines Polytetrahydrofurans I, 17,5 Gew.-% eines Polytetrahydrofurans II, 35,2 Gew.-% eines Polytetrahydrofurans III, 5,6 Gew.-% eines Polytetrahydrofurans IV, 4,9 Gew.-% eines Polyetherpolyols auf der Basis von Glycerin, Propylenoxid und Ethylenoxid mit einem mittleren Molekulargewicht von 5270 und einer mittleren Funktionalität von 2,5 und 2 ppm Zitronensäure wurden in einem Weißblecheimer unter Stickstoffatmosphäre auf 140 °C erwärmt und unter Rühren mit 24,7 Gew.-% Naphthylen-1,5-diisocyanat (NDI) versetzt. Die Reaktionstemperatur wurde zur vollständigen Umsetzung für 25 min bei über 140 °C gehalten und anschließend abgekühlt. Es resultierte eine fast farblose Flüssigkeit mit einem NCO-Gehalt von 6,09%.

### 2) Herstellung der Vernetzerkomponente: siehe Beispiel 1

### 3) Herstellung der Formkörper

97,0 Gew.-% des 90 °C warmen Prepolymeren gemäß (1) wurden mit 3,0 Gew.-% der 50 °C warmen Vernetzerkomponente gemäß (2) gemischt. 75 g der Mischung wurden in ein auf 85 °C temperiertes, verschließbares Formwerkzeug mit Federgeometrie gemäß Fig. 1 eingebracht und der Schaum bei 85 °C ausgehärtet. Zusätzlich wurden Blockformen verschäumt. Nach Entformung des mikrozellulären Produktes wurde das Formteil thermisch nachgehärtet.

### Materialeigenschaften der Beispielschäume

Die erfindungsgemäßen Schäume verbinden eine verbesserte Hochtemperaturbeständigkeit mit einer sehr guten Hydrolysebeständigkeit, was eine lange Materialnutzung auch unter erschwerten Umgebungsbedingungen ermöglicht. Dabei verliert das neue Material nicht an den charakteristischen guten dynamischen Eigenschaften.

Die dynamischen Materialeigenschaften werden an dem in Fig. 1 gezeigten Federelement ermittelt. Dabei durchlaufen die erfindungsgemäßen Federelemente aus den Beispielen 1, 2, 4 und 6 die dynamische Prüfung und ergeben geringe und damit vorteilhafte Setzbeträge.

In der folgenden Tabelle sind die Materialeigenschaften der erfindungsgemäßen zelligen Elastomere (Beispiel 1 bis 6) zusammengefasst. Die statisch-mechanischen Eigenschaften wurden aus den Blöcken, die dynamisch-mechanischen Eigenschaften aus den Federelementen (s. Fig. 1) ermittelt.

**Tabelle 1**

| | Einheit | 1 | 2 | 3.1 350g/l | 3.2 500g/l | 3.3 650g/l | 4 | 5 | 6 | Messmethode |
|---|---|---|---|---|---|---|---|---|---|---|
| TMA | in Anlehnung an ISO 11359-3 *(s.u.) | | | | | | | | | |
| 1N Prüflast | °C | 221,8 | 244,5 | 212,0 | 225,0 | 231,5 | 237,0 | 238,0 | 231,5 | |
| DVR | DIN EN ISO 1856 | | | | | | | | | |
| 80 °C 40% 22+2h | % | 18,3 | 26,5 | 13,9 | - | - | 18,1 | 18,4 | 15,5 | |
| 100 °C40% 22+2h | % | 29,9 | 41,1 | 26,8 | - | - | 31,2 | 29,6 | 25,5 | |
| 120 °C 40% 22+2h | % | 84,6 | 87,0 | 58,4 | - | - | 91,8 | 83,2 | 81,2 | |
| 140 °C 40% 22+2h | % | 97,1 | 97,4 | 98,1 | - | - | - | 97,6 | 96,5 | |
| Kriechtest | ** (s.u.) | | | | | | | | | |
| 130 °C 24h 2kg/cm² | % | 0,5 | 0,3 | - | - | - | -0,8 | 1,5 | -1,0 | |
| 150 °C 24h 2kg/cm² | % | -2,9 | -0,5 | -9,8 | -5,6 | -4,2 | -4,1 | -3,4 | -6,4 | |
| DMA | DIN EN 1 *** (s.u.) ISO 6721- | | | | | | | | | |
| Tg | °C | -73,4 | -73,3 | -73,3 | -73,5 | -73,4 | -73,3 | -73,6 | -68,3 | |
| TE | °C | 172 | 180 | 160 | 168 | 168 | 170 | 175 | 180 | |
| Dynamik | | | | | | | | | | |
| KL | mm | 60,5 | 55 | 73,4 | 61,2 | 54,2 | 62,3 | 59,4 | 61,6 | **** (s.u.) |
| LW | Anzahl | 100000 | 100000 | - | - | - | - | 100000 | 100000 | ***** (s.u.) |
| SB | % | 7,3 | 11,7 | - | - | - | - | 8,5 | 7 | |
| WZ | mm | 1,3 | 1,6 | - | - | - | - | 1,6 | 1 | |
| Dmax | % | 10,8 | 15,2 | - | - | - | - | 13,7 | 10,7 | |
| Tmax | °C | 78 | 88 | - | - | - | - | 88 | 84 | |

| | | | | | | | | | | |
|---|---|---|---|---|---|---|---|---|---|---|
| - keine Werte vorliegend * Der Prüfkörper (d=8mm h=2mm) wird mit 1N belastet; Ergebnis entspricht dem 1. Temperaturwert bei dem die Probenhöhe unter 100% absinkt; ** Der Prüfkörperwürfel (Kantenlänge=30mm) wird mit 18kg/9cm² konstant belastet und bei 130 °C bzw. 150 °C gelagert; Ergebnis = prozentuelle Verformung bezogen auf die Ausgangshöhe *** Bei der Torsionsprüfung wird der Speichermodul des Prüfstabes (40mm x 12mm x 2mm) im Temperaturbereich von -80 °C bis 280 °C untersucht (Torsionsfrequenz 1 Hz). **** Kennlinie: Federweg der Standardprüffeder gemäß Figur 1 bei einer Stauchkraft von 6kN. ***** Dynamische Prüfbedingungen: Last 6 kN; Frequenz 1,2 Hz; Lastwechselzahl 100.000 Zyklen; ohne Ventilatorkühlung; der prozentuale Setzbetrag (SB) ergibt sich aus dem prozentualen Verhältnis der Resthöhe der Feder nach der Prüfung (HR) zur Federausgangshöhe H0 vor der Prüfung: SB = [(H0-HR)/H0)]*100[%] | | | | | | | | | | |

### Hochtemperaturbeständigkeit:

Prüfbedingungen: Der Probekörper wurde mit 0,2kg/cm² konstant belastet und auf 300 °C aufgeheizt. Die in Tabelle 3 angegebenen Werte sind die Temperaturen, bei denen die Proben unter ihre Ausgangshöhe sinken, d.h. es sind die Temperaturen, bei denen die Materialien nicht mehr mechanisch stabil sind.

Die erfindungsgemäßen Naphthylen-1,5-diisocyanat basierenden PTHF-Materialien (Beispiele 1, 2, 4) zeigen bei der thermisch-mechanischen-Analyse sehr gute Ergebnisse.

**Tabelle 3: Hochtemperaturbeständigkeit**

| Beispiel 1 | Beispiel 2 | Beispiel 4 |
|---|---|---|
| 245°C | 237°C | 222°C |

## Patentansprüche

1. Zelliges Polyisocyanat-Polyadditionsprodukt mit einer Dichte nach DIN EN ISO 845 zwischen 200 bis 800 kg/m³, **dadurch gekennzeichnet, dass** das zellige Polyisocyanat-Polyadditionsprodukt das Umsetzungsprodukt von (a) Isocyanat mit
(b1) aliphatischen Polyetheralkoholen mit einem zahlenmittleren Molekulargewicht von 300 bis 1000 g/mol,
(b2) aliphatischen Polyetheralkoholen mit einem zahlenmittleren Molekulargewicht von 2000 bis 10000 g/mol und
(b3) Polytetrahydrofuran mit einem zahlenmittleren Molekulargewicht von 10000 bis 100000 g/mol
enthält.

2. Zelliges Polyisocyanat-Polyadditionsprodukt gemäß Anspruch 1, **dadurch gekennzeichnet, dass** das Polytetrahydrofuran mit einem zahlenmittleren Molekulargewicht von 10000 bis 100000 g/mol in einem Gewichtsanteil von mindestens 4 Gew.-%, bezogen auf das Gesamtgewicht des zelligen Polyisocyanat-Polyadditionsprodukt, in dem zelligen Polyisocyanat-Polyadditionsprodukt vorliegt, wobei sich das Gewicht auf das Gewicht des zur Herstellung des zelligen Polyisocyanat-Polyadditionsproduktes eingesetzten Polyetheralkohols bezieht.

3. Zelliges Polyisocyanat-Polyadditionsprodukt gemäß Anspruch 1, **dadurch gekennzeichnet, dass** das zellige Polyisocyanat-Polyadditionsprodukt bei 24 h Lagerung bei 150 °C und einer Prüflast von 2 kg/cm² ein Kriechen von weniger als 10% zeigt.

4. Zelliges Polyisocyanat-Polyadditionsprodukt gemäß Anspruch 1, **dadurch gekennzeichnet, dass** das zellige Polyisocyanat-Polyadditionsprodukt eine Zugfestigkeit nach DIN EN ISO 1798 von > 2 N/mm², eine Bruchdehnung nach DIN EN ISO 1798 von ≥ 200%, und eine Weiterreißfestigkeit nach DIN ISO 34-1B(b) von ≥ 6 N/mm aufweist.

5. Zelliges Polyisocyanat-Polyadditionsprodukt gemäß Anspruch 1, **dadurch gekennzeichnet, dass** das Isocyanat (a) ausgewählt ist aus der Gruppe bestehend aus 2,2'-Diphenylmethandiisocyanat, 4,4'-Diphenylmethandiisocyanat (MDI), 1,5-Naphthylendiisocyanat (NDI), Tolidindiisocyanat (TODI) und Mischungen davon.

6. Zelliges Polyisocyanat-Polyadditionsprodukt gemäß Anspruch 1, **dadurch gekennzeichnet, dass** der aliphatische Polyetheralkohol (b1) und/oder (b2) Polytetrahydrofuran ist.

7. Prepolymer basierend auf der Umsetzung von wenigstens einem Diisocyanat (a) und wenigstens einem Polyetheralkohol (b), **dadurch gekennzeichnet, dass** der wenigstens eine Polyetheralkohol (b) die folgenden Komponenten enthält:
(b1) aliphatische Polyetheralkohole mit einem zahlenmittleren Molekulargewicht von 300 bis 1000 g/mol,
(b2) aliphatische Polyetheralkohole mit einem zahlenmittleren Molekulargewicht von 2000 bis 10000 g/mol und
(b3) Polytetrahydrofuran mit einem zahlenmittleren Molekulargewicht von 10000 bis 100000 g/mol.

8. Prepolymer nach Anspruch 7, **dadurch gekennzeichnet, dass** wenigstens 12 Gew.-% Komponente (b1), wenigstens 35 Gew.-% Komponente (b2) und wenigstens 4 Gew.-% Komponente (b3) vorliegen, jeweils bezogen auf das Gesamtgewicht der eingesetzten Polyetheralkohole.

9. Prepolymer nach Anspruch 7, **dadurch gekennzeichnet, dass** es einen NCO-Gehalt von kleiner 10% aufweist.

10. Prepolymer nach Anspruch 7, **dadurch gekennzeichnet, dass** das Diisocyanat (a) ausgewählt ist aus der Gruppe bestehend aus 2,2'-Diphenylmethandiisocyanat, 4,4'-Diphenylmethandiisocyanat (MDI), 1,5-Naphthylendiisocyanat (NDI), Tolidindiisocyanat (TODI) und Mischungen davon, besonders bevorzugt 1,5-Naphthylendiisocyanat (NDI).

11. Verfahren zur Herstellung eines zelligen Polyisocyanat-Polyadditionsproduktes umfassend die Schritte:
(A) Umsetzung von wenigstens einem Diisocyanat (a) mit wenigstens einem Polyetheralkohol (b), um ein Prepolymer zu erhalten und
(B) Umsetzung des in Schritt (A) erhaltenen Prepolymers in einer Form mit wenigstens einer Vernetzungskomponente enthaltend Wasser, um das zellige Polyisocyanat-Polyadditionsprodukt zu erhalten,
wobei der in Schritt (A) eingesetzte Polyetheralkohol die folgenden Komponenten enthält:
(b1) aliphatische Polyetheralkohole mit einem zahlenmittleren Molekulargewicht von 300 bis 1000 g/mol,
(b2) aliphatische Polyetheralkohole mit einem zahlenmittleren Molekulargewicht von 2000 bis 10000 g/mol und
(b3) Polytetrahydrofuran mit einem zahlenmittleren Molekulargewicht von 10000 bis 100000 g/mol.

12. Verfahren nach Anspruch 11, **dadurch gekennzeichnet, dass** ein Prepolymer nach einem der Ansprüche 7 bis 10 eingesetzt wird.

13. Zelliges Polyisocyanat-Polyadditionsprodukt, herstellbar nach dem Verfahren gemäß Anspruch 11 oder 12.

14. Verwendung eines zelligen Polyisocyanat-Polyadditionsproduktes nach Anspruch 1 oder 13 als Dämpfungselement.

## Claims

1. A cellular polyisocyanate polyaddition product having a density to DIN EN ISO 845 of from 200 to 800 kg/m3, which comprises the reaction product of (a) isocyanate with
(b1) an aliphatic polyether alcohol having a number-average molar mass of from 300 to 1000 g/mol,
(b2) an aliphatic polyether alcohol having a number-average molar mass of from 2000 to 10 000 g/mol, and
(b3) a polytetrahydrofuran having a number-average molar mass of from 10 000 to 100 000 g/mol.

2. The cellular polyisocyanate polyaddition product according to claim 1, wherein the polytetrahydrofuran having a number-average molar mass of from 10 000 to 100 000 g/mol present in the cellular polyisocyanate polyaddition product is at least 4% by weight, based on the total weight of the cellular polyisocyanate polyaddition product, where the weight is based on the weight of the polytetrahydrofuran whose number-average molar mass is from 10 000 to 100 000 g/mol and which is used for the production of the cellular polyisocyanate polyaddition product.

3. The cellular polyisocyanate polyaddition product according to claim 1, which exhibits creep of less than 10% when kept for 24 h at 150° C., using a test load of 2 kg/cm2.

4. The cellular polyisocyanate polyaddition product according to claim 1, whose tensile strength to DIN EN ISO 1798 is >2 N/mm2, whose tensile strain at break to DIN EN ISO 1798 is ≧200%, and whose tear-propagation resistance to DIN ISO 34-1B(b) is ≧6 N/mm.

5. The cellular polyisocyanate polyaddition product according to claim 1, wherein the isocyanate (a) is selected from the group consisting of diphenylmethane 2,2'-diisocyanate, diphenylmethane 4,4'-diisocyanate (MDI), naphthylene 1,5-diisocyanate (NDI), tolidine diisocyanate (TODI), and mixtures thereof.

6. The cellular polyisocyanate polyaddition product according to claim 1, wherein where the aliphatic polyether alcohol (b1) and/or (b2) is polytetrahydrofuran.

7. A prepolymer based on the reaction of at least one diisocyanate (a) and of at least one polyether alcohol (b), wherein the at least one polyether alcohol (b) comprises the following components:
(b1) an aliphatic polyether alcohol having a number-average molar mass of from 300 to 1000 g/mol,
(b2) an aliphatic polyether alcohol having a number-average molar mass of from 2000 to 10 000 g/mol, and
(b3) polytetrahydrofuran having a number-average molar mass of from 10 000 to 100 000 g/mol.

8. The prepolymer according to claim 7, wherein at least 12% by weight of component (b1), at least 35% by weight of component (b2), and at least 4% by weight of component (b3) are present, in each case based on the total weight of the polyether alcohols.

9. The prepolymer according to claim 7, having NCO content smaller than 10%.

10. The prepolymer according to claim 7, wherein the diisocyanate (a) is selected from the group consisting of diphenylmethane 2,2'-diisocyanate, diphenylmethane 4,4'-diisocyanate (MDI), naphthylene 1,5-diisocyanate (NDI), tolidine diisocyanate (TODI), and mixtures thereof, particularly preferably being naphthylene 1,5-diisocyanate (NDI).

11. A process for the production of a cellular polyisocyanate polyaddition product, comprising:
(A) reacting at least one diisocyanate (a) with at least one polyether alcohol (b), to obtain a prepolymer, and
(B) reacting, in a mold, the prepolymer obtained in step (A) with at least one crosslinking component comprising water, in order to obtain the cellular polyisocyanate polyaddition product,
where the polyether alcohol used in (A) comprises the following components:
(b1) an aliphatic polyether alcohol having a number-average molar mass of from 300 to 1000 g/mol,
(b2) an aliphatic polyether alcohol having a number-average molar mass is from 2000 to 10 000 g/mol, and
(b3) polytetrahydrofuran having a number-average molar mass of from 10 000 to 100 000 g/mol,

12. The process according to claim 11, wherein the prepolymer is a prepolymer be produced according to claim 7 to 10.

13. A cellular polyisocyanate polyaddition product that can be produced by the process according to claim 11 or 12.

14. A damping element, comprising the cellular polyisocyanate polyaddition product of claim 1 or 13.

## Revendications

1. Produit de polyaddition polyisocyanate cellulaire ayant une masse volumique selon la norme DIN EN ISO 845 entre 200 et 800 kg/m³,
**caractérisé en ce que** le produit de polyaddition polyisocyanate cellulaire comprend le produit de réaction de (a) isocyanate avec
(b1) polyéther alcools aliphatiques ayant un poids moléculaire moyen en nombre de 300 à 1000 g/mol,
(b2) polyéther alcools aliphatiques ayant un poids moléculaire moyen en nombre de 2000 à 10000 g/mol et
(b3) polytétrahydrofurane ayant un poids moléculaire moyen en nombre de 10.000 à 100.000 g/mol.

2. Produit de polyaddition polyisocyanate cellulaire selon la revendication 1, **caractérisé en ce que** le polytétrahydrofurane ayant un poids moléculaire moyen en nombre de 10 000 à 100 000 g/mole est présent dans une fraction massique d'au moins 4% en poids, par rapport au poids total du polyisocyanate cellulaire, dans lequel le poids se réfère au poids du polyéther-alcool utilisé pour la préparation du produit de polyaddition de polyisocyanate

3. Produit de polyaddition polyisocyanate cellulaire selon la revendication 1, **caractérisé en ce que** le produit de polyaddition de polyisocyanate cellulaire présente un fluage inférieur à 10% lorsqu'il est stocké pendant 24 heures à 150 °C et une charge d'essai de 2 kg/cm².

4. Produit de polyaddition polyisocyanate cellulaire selon la revendication 1, **caractérisé en ce que** le produit polyaddition polyisocyanate cellulaire a une résistance à la traction selon DIN EN ISO 1798 de > 2 N/mm², un allongement à la rupture selon DIN EN ISO 1798 de ≥200% et une résistance au déchirement selon DIN ISO 34-1B (b) de ≥6 N/mm.

5. Produit de polyaddition polyisocyanate cellulaire selon la revendication 1, **caractérisé en ce que** l'isocyanate (a) est choisi dans le groupe constitué par le 2,2'-diphénylméthane diisocyanate, le 4,4'-diphénylméthane diisocyanate (MDI), le 1, 5-naphtylène diisocyanate (NDI), diisocyanate de tolidine (TODI) et leurs mélanges.

6. Produit de polyaddition polyisocyanate cellulaire selon la revendication 1 **caractérisé en ce que** le polyéther alcool aliphatique (b1) et/ou (b2) est le polytétrahydrofurane.

7. Prépolymère basé sur la réaction d'au moins un diisocyanate (a) et d'au moins un polyéther alcool (b), **caractérisé en ce que** le polyéther alcool (b) contient les composants suivants:
(b1) polyéther-alcools aliphatiques ayant un poids moléculaire moyen en nombre de 300 à 1000 g/mol,
(b2) polyéther-alcools aliphatiques ayant une poids moléculaire moyenne en nombre de 2.000 à 10.000 g/mol et
(b3) polytétrahydrofurane ayant un poids moléculaire moyen en nombre de 10.000 à 100.000 g/mol.

8. Prépolymère selon la revendication 7, **caractérisé en ce qu'**au moins 12% en poids de composant (b1), au moins 35% en poids de composant (b2) et au moins 4% en poids de composant (b3) sont présents par rapport au poids total polyéther.

9. Prépolymère selon la revendication 7, **caractérisé en ce qu'**il présente une teneur en NCO inférieure à 10%.

10. Prépolymère selon la revendication 7, **caractérisé en ce que** le diisocyanate (a) est choisi dans le groupe constitué par le 2,2'-diphénylméthane diisocyanate, le 4,4'-diphénylméthane diisocyanate (MDI), le 1, 5-naphtylène diisocyanate (NDI), le tolidine diisocyanate (TODI) et leurs mélanges, plus préférablement le 1, 5-naphtylènediisocyanate (NDI).

11. Procédé de préparation d'un produit de polyaddition polyisocyanate cellulaire comprenant les étapes consistant à:
(A) faire réagir au moins un diisocyanate (a) avec au moins un polyéther alcool (b) pour obtenir un prépolymère et
(B) faire réagir le prépolymère obtenu dans l'étape (A) dans une forme ayant au moins un composant réticulant contenant de l'eau pour obtenir le produit de polyaddition polyisocyanate cellulaire,
dans lequel le polyéther alcool utilisé dans l'étape (A) contient les composants suivants:
(b1) polyéther alcool aliphatique ayant un poids moléculaire moyen en nombre de 300 à 1000 g/mol,
(b2) polyéther alcool aliphatique ayant un poids moléculaire moyen en nombre de 2000 à 10000 g/mol et
(b3) polytétrahydrofurane ayant un poids moléculaire moyen en nombre de 10.000 à 100.000 g/mol.

12. Procédé selon la revendication 11, **caractérisé en ce que** l'on utilise un prépolymère selon l'une quelconque des revendications 7 à 10.

13. Produit de polyaddition polyisocyanate cellulaire, préparable par le procédé selon la revendication 11 ou 12.

14. Utilisation d'un produit de polyaddition polyisocyanate cellulaire selon la revendication 1 ou 13 en tant qu'élément amortisseur.
